# EUROPEAN PATENT SPECIFICATION

(11) **EP 0 534 164 B1**
(45) Date of publication and mention of the grant of the patent: **11.11.1998**
(21) Application number: 92114735.1
(22) Date of filing: 28.08.1992
(51) Int. Cl.: C22C 32/00, C22C 1/10, C22C 38/40, C22C 38/18, C22C 19/05, G21C 3/07

(54) **Method of manufacturing a nitride dispersed alloy and use thereof**
Herstellung einer nitrid-dispersionsverfertigten Legierung und deren Verwendung
Fabrication d'un alliage renforcé par dispersion de nitrures et son usage.

(30) Priority: 28.08.1991 JP 242632/91
(43) Date of publication of application: 31.03.1993
(73) Proprietor: Hitachi, Ltd., Chiyoda-ku, Tokyo 101-0062 (JP)
(72) Inventor: Aono, Yasuhisa, Hitachi-shi, Ibaraki-ken (JP); Ikeda, Shinzo, Naka-gun, Ibaraki-ken (JP); Sukekawa, Masayuki, Kitaibaraki-shi Ibaraki-ken (JP); Kato, Takahiko, Katsuta-shi, Ibaraki-ken (JP); Kondo, Yasuo, Katsuta-shi, Ibaraki-ken (JP); Izumiya, Masakiyo, Mito-shi, Ibaraki-ken (JP); Fukui, Yutaka, Hitachi-shi, Ibaraki-ken (JP); Kodama, Hideyo, Katsuta-shi, Ibaraki-ken (JP); Kayano, Hideo, Mito-shi, Ibaraki-ken (JP); Kurishita, Hiroaki, Mito-shi, Ibaraki-ken (JP); Yasuda, Ken, Hitachi-shi, Ibaraki-ken (JP)
(74) Representative: Beetz & Partner Patentanwälte

(56) References cited:
- DE-A- 2 412 022
- FR-A- 936 372
- FR-A- 2 130 546
- GB-A- 1 434 729
- GB-A- 2 156 854
- US-A- 2 888 738
- US-A- 3 192 039
- US-A- 3 192 040
- US-A- 3 728 088
- US-A- 4 075 010
- PATENT ABSTRACTS OF JAPAN vol. 7, no. 209 (C-186)14 September 1983 & JP-A-58 107 474 ( SHIN NIPPON SEITETSU KK ) 27 June 1983
- CHEMICAL ABSTRACTS, vol. 85 Columbus, Ohio, US; abstract no. 1021, KOYANAGI, YASUSHI ET AL. 'Abrasion-resistant sintered alloy at high temperature' & JP-A-51 050 209 (FUJI VALVE CO., LTD.) 1 May 1976

## Description

### BACKGROUND OF THE INVENTION

### Field of the Invention

The present invention relates to a method of manufacturing a nitride dispersed alloy, intended preferably for members constituting fast reactor, gas turbine and others, a fast fuel covered tube, a disk for gas turbines and a gas turbine.

### Description of the Prior Art

A prior art heat-resistant alloy developed and applied so far to a fuel covered tube for use on fast reactors or a component member of gas turbines includes Fe-based heat resisting steel, Ni- based alloy or Co-based alloy. As main strengthening methods available for these heat-resistant alloys, known hitherto are (1) a solid solution strengthening wherein solute atoms are solved in a base metal, and a resistance against the movement of a slip dislocation bearing a plastic deformation is increased to strengthening, (2) a precipitate strengthening wherein carbides or second phases are precipitated in alloys, thereby producing a dislocation pinning to strengthening, (3) a single orientated recrystallization wherein a grain boundary sliding is suppressed or stopped under high-temperature stresses or a perfect single crystallization, and (4) a dispersion strengthening wherein ceramics thermally stable is microscopically and uniformly dispersed in an alloy matrix to strengthening through dislocation pinning. The alloy manufacturing method then comprised melting and casting as a whole except the disperse strengthening aforementioned at (4) In the disperse strengthening at (4), a process for alloying the mixture of an alloy or metallic powder and a ceramic powder as a material on a high energy ball mill at low temperatures, and a powder metallurgy for solidification were employed. The reason why the mechanical alloying is used is that the ceramic particles intended for dispersion are easily dissolved in a melting alloy and thus annihilated according to the melting process. An Fe-based ferrite steel ((2) and (4)), an Fe-based austenitic steel ((1) and (2)), an Ni-based alloy ((1) to (4)) and a Co-based alloy ((1) to (4)) are produced by utilizing the aforementioned strengthening method.
Additionally, a determination of composition of these heat-resistant alloys is based on,needless to say, the aforementioned strengthening methods, however, it is also determined in consideration of oxidation resistance at high temperatures, corrosion resistance or phase stability at the same time.

A solid solution strengthened SUS316 austenitic steel obtained through cold work applied at 600 to 700 °C according to a kind of reactors has been employed mainly hitherto for the fast reactor fuel covered tube material. While the austenitic steel is superior in high temperature strength as compared with the ferrite steel, it forms voids of aggregates of radiation-induced vacancies under neutron exposure of the covered tube in 10²³n/cm² order, and thus is capable of causing a radiation-induced swelling called "void swelling ", involving a factor to deteriorate a high reliability of the covered tube. In view particularly of a void swelling resistance of the ferrite steel, a manufacturing method of a so-called oxide dispersion strengthened ferrite steel (ODS ferrite steel) constituted mainly of an oxide Y₂O₃ in a ferrite steel matrix for strengthening has been disclosed of late in Japanese Patent Unexamined Publication No. 1-287252. Further, a developing study of the ODS ferrite steel is reported, for example, in Kove Steel Technical Report, vol. 40, No. 1 (1990), at pages 58 to 61, and also in Sumitomo Metal's vol. 42, No. 5 (1990), at pages 1 to 8.

For the gas turbine materials, an examination is made on how to utilize Cr-Mo-V steel as a turbine disk material at working temperatures up to 350 °C, 12 Cr steel of the ferrite group including 2 to 3% Ni as the disk at the temperature up to 400 °C , and 12 Cr steel improved from having high Mo, low V and Nb added thereto as the disk at the temperatures exceeding 400 °C. Since a heat resistance to 800 °C or around is required for materials of gas turbine burner, nozzle, turbine blade, shroud and so forth, Ni-based alloy including γ' [Ni₃(Al, Ti)] strengthening phase or the Co-based alloy for which solid solution strengthening by Ni, W etc. and a precipitate strengthening by carbides is realized has been used. In particular, severe conditions such as creep resistance, heat resisting fatigue characteristic, and corrosion resistance are required for blade materials, the strengthening method (3) above is thus applied for enhancing a high temperature strength, and a columnar crystallization and a single crystallization of the γ' phase strengthened Ni-based alloy is put into practice. Further, for the rise of power generation efficiency, a turbine inlet temperature is on the way to rise in the future, and existing heat-resistant alloys will be of no service accordingly.

What is drawing the attention as the second generation materials is a ceramic dispersed and strengthened alloy obtainable through a mechanical alloying process, a method for dispersing oxide such as Y₂O₃ or the like, carbide, nitride and boride is disclosed in Japanese Patent Unexamined Publication No. 63-50448 for the Fe-based alloy, an oxide dispersing method is disclosed in Japanese Patent Unexamined Publication No. 63-53232 for the Ni alloy, a Ti nitride dispersing method is disclosed in Japanese Patent Unexamined Publication No. 60-230948 and Japanese Patent Unexamined Publication No. 62-130257, and an oxide dispersing method is disclosed in Japanese Patent Unexamined Publication No. 61-195945 for the Co-based alloy. A commercialization and developing study of the Y₂O₃ dispersed and strengthened Ni-based alloy is realized, for example, by goods commercially available by INKO Co. (Cr: 15%, W: 4%, Mo: 2%, Al : 4.5%, Ti: 2.5%, Ta: 2.0%, C: 0.05%, B: 0.01%, Zr: 0.15%. Y₂O₃: 1.1%, the remainder being Ni), and is also indicated in Report 9 (1988) by National Research Institute for Metals, Science and Technology Agency, at pages 1 to 9.

The prior art strengthening methods, for polycrystal alloys obtained through melting and casting in (1) to (3) above, and a subsequent working, heat treatment and so forth refer to the solid solution strengthening and the precipitate strengthening, however, what is problematical is that the strength decreases at a high temperature zone from 500 °C to 1,000 °C according as temperature rises. A deformation mechanism of temperature dependency has something to do with the factor. More specifically, a decrease in strength at high temperature, namely an easy occurrence of plastic deformation depends on an easy generation of dislocation movement relating to a deformation of the alloy matrix, and depends also on an easy occurrence of grain boundary sliding characteristic in high temperature zone in the case of alloys having a matrix with a relatively high strength at high temperatures.
However, the grain boundary sliding does not necessarily occur, and is suppressible by an enrichment of solutes which control the sliding at a grain boundary and a presence of precipitates. In the solid solution alloy an atom constituting a dislocation includes solutes, therefore a strain energy of the dislocation increases, and a dislocation movement under stress is impeded. The height of a barrier as resistance of the dislocation itself depends on types of and a diffusibility of the solutes, however, it is overcome by thermal activation owing to temperature being rising, so that a resistance is reduced. Accordingly, the alloy cannot be used where the temperature is so high that the solid solution alloy loses the resistance. Even in a precipitate strengthening type alloy available to preventing an easy dislocation movement by forming precipitates such as carbide and the like, barriers of precipitates are overcome by the dislocation according to temperature rising or the alloy reaches a dissolution temperature zone of the precipitates soon, so that the strength is reduced and therefore subjected to a restriction of the working temperature. For instance, the carbide precipitate strengthened ferrite steel has its strength quickly reduced at 800 °C or around due to dissolution and resolution of the carbides. There is an alloy having the strength improved by employing solid solution strengthening and precipitate strengthening at the same time, however, it makes the strengthening mechanism indicating a resistance most highly in this case to rate-control the deformation (strength), and thus it it difficult to apply the alloy at a temperature exceeding the high temperature whereat the strengthening function is lost.

Meanwhile, what is developed as a heat super resisting alloy exceeding the solid solution alloy and the precipitate strengthened alloy is an oxide, or particularly a Y₂O₃ dispersion strengthened alloy already commercialized, however, the problem inherent therein is that the strength is reduced at the temperature exceeding 1,000 °C. This may be caused by the phenomenon in which Y₂O₃ dispersed particles expected of a time-dependent stability at the temperature or around react with an alloy matrix for a short period of time to dissolution, thus a dislocation pinning mechanism of Y₂O₃ which realizes a high strength at high temperatures is lost, and the strength is reduced consequently. Generally, metallic oxides including Y₂O₃ have a good reaction to metals, and a metal or alloy and a ceramic member are joined together by an oxide solder from utilizing the property of of Y₂O₃. Further, since dispersion alloys obtained through mechanical alloying by means of powders contain comparatively much oxygen coming in from material powders, an oxide consisting of alloy elements is produced at the time of mechanical alloying and sintering for solidification. Generally, Y₂O₃ is easy to react with other metallic oxides, and reacts with the aforementioned oxide to form a thermally unstable oxide, which leads to a problem.

GB-A-1 434 729 discloses an austenitic steel comprising 0.006 % carbon, 18.8 % chromium, 11.4 % nickel, 3.8 % titanium with iron and normal impurities for the remaining balance, wherein the austenitic steel powder is pressed at a pressure lying in the range of 20 t.s.i. to 30 t.s.i. to form a porous body; this body is then heated in a nitriding atmosphere to a temperature lying in the range of 1000 to 1200 °C; TiN is dispersed in the austenitic steel as well as nitrides of Nb, V, and Al. Nitride products are formed within the pores of the pressured porous body of the austenitic steel powder as well as on the surface of the powder. The consequent decrease in the size of the pores means that the nitrogen gas cannot be provided inside the body. Therefore, it is obvious from this that the particle size of the nitride products of the cited reference must necessarily be extremely large.

### SUMMARY OF THE INVENTION

An object of the present invention is to provide a method of manufacturing a heat-resistant nitride dispersion strengthened alloy preferable for members constructing fast reactors, gas turbines and the like form solving the problem inherent in the prior art heat-resistant alloy and the oxide dispersion strengthened alloy, and the use thereof for a fast fuel covered tube, a gas turbine disk and a gas turbine.

In order to attain the aforementioned object, the present invention relates to a method of manufacturing a nitride dispersed alloy as claimed in claim 1 and uses thereof as claimed in claims 12 to 14.

Advantageous possible features of said method are claimed with claims 2 to 11. The heat-resistant nitride dispersion strengthened alloy has a mean particle size of the strenghened alloy powders of 50 pm to 500 µm, and a maximum size of not more than 1 mm.

The increase in size of AlN particles and BN particles dispersed in the matrix of the base metal occurs by cohesion of the particles at the time of the mechanically alloying.

In the case of alloying a mixture of Ni-based alloy constituting powders and one or two kinds of AlN powders and BN powders mechanically on a high energy ball mill, one or two kinds of AlN particles and BN particles of 0.001 µm to 5 µm in size distribution are dispersed into a matrix consisting of γ phase of a solid solution or γ and γ' phases thereof.

The heat-resistant alloy has a combination of elements of a base metal or composites and additives generally determined according to how it is intended and economical efficiency. For example, an adaptability with Na as a cooling material is required with the fast reactor fuel covered tube, which is subjected further to conditions such as a volume expansion according to void swelling of the nuclear fuel incorporated therein at high temperatures 600 °C to 700 °C and also under radiation damage by fission neutrons, an internal pressure of the covered tube due to gas as a fission product and a radiation damage by neutrons. As alloys for the gas turbine, a high temperature strength in the range from 400 °C to 500 °C is required in the turbine disk, and a high strength and a resistance to high-temperature corrosion in the range from 800 °C to 1,000 °C are required in members such as burner, nozzle, turbine blade and shroud.

In any case, what is required most as the heat-resistant alloy is the high temperature strength, which is now realizable by a dispersion strengthening of one or two kinds of AlN particles and BN particles according to the present invention. AlN and BN are ceramics most unsatisfactory in a wetness with metals, and are also ceramics more resistant to reaction and thus most unwelcome in how to join metals and ceramics together. These properties of AlN and BN particles are enhanced furthermore by subjecting these nitrides to a high purification, and the purity is preferable at 98% or over, more preferably at 99% or over in the case of AlN and at 97% or over, more preferably at 98% or over in the case of BN from industrial productivity. On the other hand, these properties of AlN and BN particles will be important for the strengthening mechanism. The ceramics being not easily reactive with the base metal matrix alloy at high temperature and hard of dissolving thereinto, the strengthening mechanism can be maintained all the more even at higher temperatures. Particularly the Ni-based alloy is resistive against nitriding, and hence a reactivity between AlN, BN and an Ni-based alloy matrix is low. Further, AlN is more stable particularly in an oxidation atmosphere at high temperatures, and as reported, for example, in Journal of Materials Letters, Vol. 8 (1989), pp265 to 266, it has a superior characteristic totally free from wear even in the atmosphere at 1,200 °C as compared with other nitrides. Additionally, the microscopically dispersed AlN and BN are effective in working as a vanishing point of neutron irradiation induced vacancies, a formation of voids to which the vacancies aggregate is controlled, and thus a volume expansion of the materials according to a void swelling can be suppressed.

A strengthening by dispersed particles, that is, a suppression effect of the dislocation movement to bring about a deformation by the particles increases where the diameter of particles is finer and the particles are spaced apart so short. However, if a further fineness and a reduction of the space of dispersed particles are realized, and a resistance against the dislocation movement is sharply enhanced, then the deformation becomes difficult. In order to obtain a smooth processing of the dispersion strengthened alloys and a preferable stiffness, a size distribution of the dispersed particles will be at 0.001 µm to 5 µm in consideration particularly of a cohesion of the particles to arise at the time of manufacture, and hence a primary size distribution of AlN and BN powders to use will preferably be 0.001 pm to 0.1 pm. In referring to the example of Y₂O₃ dispersion strengthened alloys, an amount of AlN and BN will preferably be at 0.25 to 0.5% in the case of Fe-based alloy for the covered tube, and at 0.5 to 1.0% for the gas turbine which requires a higher strength. Likewise, the amount coming at 0.5 to 1.0% is preferable in the case of Ni-based alloys for the gas turbine for which a strength at 800 °C or higher must be ensured. An upper bound of the size distribution of alloys and metallic powders is specified at 150 µm, because a sintering efficiency for mechanical alloying and solidification must be enhanced.

An impact energy or mechanical energy of steel balls moving in a high energy ball mill which works between the steel balls or between the steel ball and the receptacle is accumulated in powders present therebetween through the process of compression crush and shear crash, thereby realizing the mechanical alloying. In this case the alloying in an atomic order may arise through diffusion even at low temperature around room temperature by repeated forging joining and folding of the mixed powders each other. For preferable alloying a high impact energy will be necessary and an alloying efficiency must also be enhanced, however, it is preferable that the ratio of a mixed powder weight to a steel ball weight be 1/10 to 1/20 in the case of attriter, 1/5 to 1/10 in the case of epicyclic ball mill, and a rotational frequency of the ball mill be 200 to 400 rpm. It is desirable that the alloying process be kept running for 20 hours or longer so that the powders will be processed to the alloy powders of a flat lamellar structure. As a pretreatment for alloying, it is preferable that an evacuation as 1.33·10⁻² to 1.33·10⁻³ mbar (10⁻² to 10⁻³ torr) be carried out for 30 minutes to 60 minutes so as to remove water content and oxygen present in a space within the ball mill receptacle, or on the inside wall and the surfaces of balls and mixed powders in consideration of an incoming of the oxygen at the time of alloying.

A solidification of the dispersed alloying powders by sintering is carried out by charging the steel receptacle with the powders according to a powder metallurgy which are subjected to hot extrusion or HIP process. For the sintering, a temperature zone from 1,000 to 1,300 °C is preferable in the Fe-based alloy and the Ni-based alloy in consideration of a diffusive fusion between powders, a filling-up, a more solution of the alloy atoms and a limit of a high temperature stability of AlN or BN. Here, the receptacle evacuation to be carried out as a pretreatment is similar to the foregoing treatment, however, a sequential removal of water content, oxygen and other contamination present or adsorbed in a space within the receptacle, or on the receptacle inside and the surface of powders is intended so as to prevent the oxygen from being contained in the dispersed alloy, and a stepwise processing is preferable as 10 to 30 minutes at 100 °C in evacuation at 1.33·10⁻² to 1.33·10⁻³ bar (10⁻² to 10⁻³ torr), 10 to 30 minutes at 200 °C and 30 minutes at 400 °C.

In a composition of the AlN or BN dispersion strengthened Fe-based austenitic steel according to the present invention, when it is used as a fast reactor fuel covered tube, an equivalent to 316L stainless steel prevailing as a base metal is preferable for stabilization of an austenitic phase and also for control of a void swelling, a high amount is preferable particularly in Ni, and thus the alloy composition will come preferably in Ni: 12 to 30%, Cr: 16 to 18%, Mo: 2.0 to 3.0%. In the steel strengthened by high C a degradation of strength may be caused by an elusion of C into Na, therefore C will preferably be low in concentration as a content. Particularly the content available industrially as 0.01 to 0.03% is preferable.

From the viewpoints of solidification of 0 and the content C which are strongest in affinity therewith and causative of an embrittlement, an enhancement of additional strength by the formed TiO or TᵢO₂, TiC, NbO, NbC, and further the reminder being solved to bring about an effect in preventing a void swelling resulting from a neutron exposure damage of the fuel covered tube, Ti and Nb added to the base metal will be preferable at 0.5% or over and at 0.7% or over, or particularly at 0.5 to 1.0% and at 0.7 to 2.0%, respectively.

For composition when used as a gas turbine material, a somewhat high content of C is preferable in expectation of a carbide precipitation hardening, however, 0.15% will be acceptable at best. For improving a corrosion resistance to high temperature, Cr in the base metal will be 15% or over, and is preferable at 33% maximum as corresponding to an increase of Ni.

To suppress a formation of ferries according to an increase of Cr, Ni must be added somewhat high at 20 to 30% in the base metal.

While W and Mo are added in the base metal for solution strengthening and also for strengthening by these carbides, an increase in addition rate of Mo brings about σ phase or that of complicate structure, these will preferably be mixed as Mo: 1.25 to 3.0%, and W: 0.005 to 3.0% in taking an addition of two elements also into consideration.

Al is added in the base metal for providing a heat resistance, and Ti is added in the base metal for fixation of 0 along with Al and strengthening according to a formation of TiC, these being added preferably as Al: 0.1 to 0.2%, Ti: 1.75 to 2.0%.

In a composition of AlN or BN dispersion strengthened Fe-based ferrite steel not inclusive of Al, C in the base metal is desirable as low as possible in concentration as material for the covered tube as described hereinbefore, and hence it is preferable that the upper bound be 0.05% in consideration of how to increase the strength, that is, increasing TiC. The range coming in 0.01 to 0.05% is preferable in particular. In a turbine material, the higher, the better so as to increase the strength by a carbide precipitation. The range 0.08 to 0.20% is preferable in this case.

For enhancing a corrosion resistance or particularly an oxidation resistance at elevated temperature in the turbine material, Cr will be contained not less than 9% in the base metal. Much content of Cr is capable of causing a precipitation of σ phase by an aging effect for a long time, therefore an addition at 9 to 20% is preferable.

Mo and W are added for solution strengthening and also for enhancing as creep resisting characteristic from contributing to a stabilization of carbides particularly in case C is contained so much. Further Mo is necessary for enhancing a corrosion resistance to high temperatures. Both will preferably be added not less than 0.5%. Particularly in case each is added at 0.5 to 3.0% or both are added, it is preferable that the sum total be 4.0% maximumly.

Ti and Nb are necessary for stabilization of carbides and enhancing the strength, and also for fixation of an impurity O. Further, as an independent effect, these are added also for suppressing a void swelling under neutron exposure. While depending on the content of C and O, an addition is preferable at Ti: 0.5 to 1.0% and Nb: 0.7 to 2.0% in consideration of the surplus amount.

In a composition of Al-contained AlN or BN dispersion strengthened Fe-based ferrite steel for gas turbine material according to the present invention, C will preferably be high in concentration for strengthening by carbides, and hence is preferable at 0.05 to 0.2% dependently on an addition rate of carbide metals Ti, Nb, Mo and W. The reason of a preferable range of Cr, Ti, Nb, Mo and W is same as the aforementioned ferrite steel not inclusive of Al.

As in the case of Cr, Al is oxidized more easily than Fe to form a fine oxide film, and hence is added for improving an oxidation resistance of materials including a plural effect with Cr. Accordingly, Al is indispensable for the turbine material working at high temperatures. It must be added not less than 2% for enhancing particularly effective oxidation resistance, and the range coming in 2 to 5% is preferable.

In an AlN or BN dispersion strengthened Ni-based alloy corresponding to inconel in component according to the present invention, the composition corresponds to that for which Fe, Ni of SUS304 steel are substituted by Ni, Fe to an Ni-based alloy, thus enhancing a heat resistance. In a composition of Al-contanined AlN or BN dispersion strengthened Ni-based alloy, the C content will preferably be 0.15% maximum when carbide strengthening is intended as described hereinbefore, but the content will preferably be lower when a ductility is expected. Consequently, a preferable range will be 0.01 to 0.15% according to how it is applied. Cr enhances an oxidation resistance to high temperatures, and a preferable range will be 10 to 23% in consideration of σ phase formation. An addition of Ti is necessary for fixation of O, carbide strengthening and formation of γ' by a coexistence with Al, and while depending on an amount of C and Al, the addition rate will preferably come within the range 0.4 to 5.0%. Al is added for strengthening by γ' and oxidation resistance. While the addition rate is adjusted correspondingly to a Ti amount and a working temperature relating to oxidation resistance, a range of 0.5 to 6.0% is preferable as tolerance. Nb is added for fixation of 0 and carbide strengthening. A preferable range will be 0.1 to 2.0%. Ta is added for the same reason as Nb, however, an addition at 4.5% maximumly is preferable in correspondence to the amount of C, Al and Nb. Mo and W contribute to a solid solution strengthening and a stabilization of carbides in the case of high C, and are added for enhancing a creep resistance characteristic. Mo is further necessary for enhancing a corrosion resistance to high temperatures. An addition of both Mo and W is preferable at 5% maximumly.

In a composition of high W-contained AlN or BN dispersion strengthened Ni-based alloy according to the present invention, since C is intended for strengthening, a higher range will be preferable. Particularly the range 0.05 to 0.15% is preferable. For enhancing an oxidation resistance to high temperatures, Cr will preferably be added up to 25% maximumly of a limit for σ phase formation, or is particularly added at 20 to 25% for better result. For increasing solid solution strength and improving the weldability, Co is preferably added in a range 0.01 to 10 wt% being adjusted correspondingly to a W content. For increasing a high-temperature creep strength, W is added more, however, an excessive addition may induce a difficulty of solution in the mechanical alloying, therefore the range coming in 10 to 17% is preferable. When Mo of the same high-temperature strengthening element is coexistent, it is preferable that the sum of both elements be 10 to 17% likewise. An addition of any of Ti, Nb, Ta and Zr is necessary for fixation of 0 and C, and hence the addition up to 3% maximumly is preferable in correspondence to the amount of C.

### BRIEF DESCRIPTION OF THE DRAWINGS

FIG. 1 is a sectional view showing a construction of an attriter which is an apparatus for mechanical alloying relating to the present invention.

FIG. 2 is a sectional view of a soft steel receptacle and a cover used for HIP sintering of mechanical alloying powders relating to the present invention.

FIG. 3 is a working diagram of strength test pieces after hot rolling of a sintering material.

FIG. 4 is an illustration indicating a temperature dependency of yield and tensile strengths of A-1 steel.

FIG. 5 is an illustration indicating a creep rupture strength characteristic of A-1 steel at 650 °C.

FIG. 6 is a sectional view showing a construction of an epicyclic ball mill which is an apparatus for mechanical alloying relating to the present invention.

FIG. 7 is an illustration indicating a temperature dependency of yield and tensile strength of F-1 steel and F-2 steel.

FIG. 8 is an illustration indicating a creep rupture strength characteristic of F-1 steel and F-2 steel at 650 °C.

FIG. 9 is an illustration indicating a temperature dependency of yield and tensile strengths of F-3 steel and F-4 steel.

FIG. 10 is an illustration indicating a creep rupture strength characteristic of F-3 steel and F-4 steel at 650 °C.

FIG. 11 is an illustration indicating a creep rupture strength characteristic of F-4 steel, F-5 steel, F-6 steel and F-7 steel at 650 °C.

FIG. 12 is an illustration indicating a creep rupture strength characteristic of Ni-1 alloy and Ni-2 alloy at 1,093 °c.

FIG. 13 is an illustration indicating a temperature dependency of yield strength of Ni-3 alloy, Ni-4 alloy and Ni-5 alloy.

FIG. 14 is an illustration indicating a creep rupture strength characteristic of F-9 steel at 650 °C.

FIG. 15 is a sectional view of a fast reactor fuel covered tube relating to the present invention.

FIG. 16 is a sectional view of a gas turbine relating to the present invention.

### DETAILED DESCRIPTION OF PREFERRED EMBODIMENTS

### Example 1

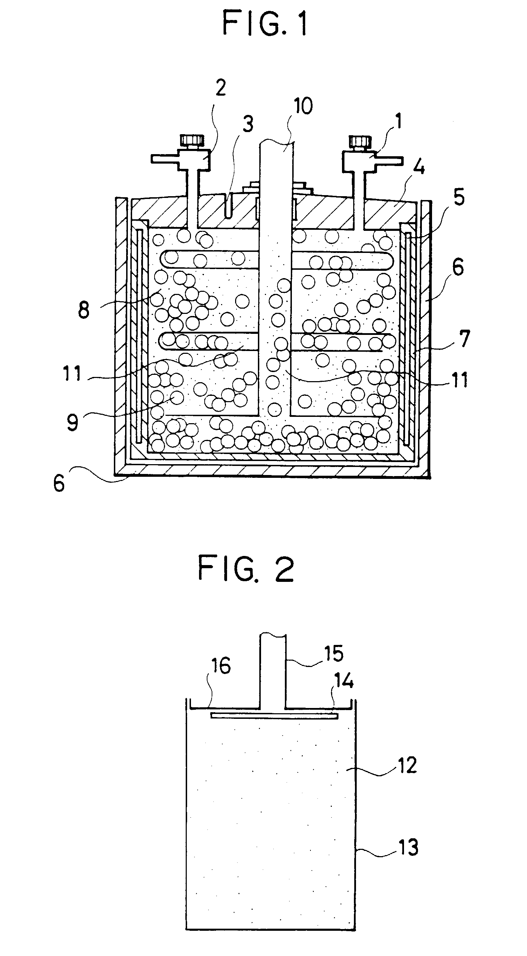

One embodiment of a manufacturing method for heat-resistant nitride dispersion strengthened alloy powders, that is AlN dispersion Fe-based austenitic steel powders according to the present invention will be described with reference to FIG. 1. FIG. 1 illustrates the case where an attriter is used for ball mill. A structure of the attriter comprises an evacuation valve 1, an Ar gas substitution valve 2, a cover 4 provided with a small aperture 3 for thermometry, a receptacle 7 capable of being equipped with a water cooling jacket 5 and a resistance heater 6, charged mixed powder 8 and a steel ball 9 which is 10 mm in diameter, a live spindle 10 to which a rotational movement is transferred from an external power source and 5 pairs of agitators 11. A kinetic energy is provided to the steel ball 9 by a collision between the rotating agitator 11 and the steel ball 9, and at the time of collision between the steel balls and between the steel ball 9 and an inside wall of the receptacle 7, the mixed powder 8 present therebetween is alloyed by a mechanical energy. For manufacturing an AlN dispersion austenitic steel powder comprising about C: not more than 0.01 wt%, Cr: 17 wt%, Ni: 12 wt%, Ti: 0.5 wt%, AlN: 0.25 wt% and the reminder being Fe, 316L steel powder, Ti powder and AlN powder given in TABLE 1 were prepared so as to have the aforementioned composition. A principal chemical component and an average particle size of sample powders each, and a kind of applied sample alloys (A-1 to Ni-5) in TABLE 2 giving a chemical analysis result that is a final component value are indicated in TABLE 1. A weight of the mixed powder is determined so as to have the rate of a total weight (15 kgs) of the steel balls 9 to a weight of the mixed powders at 15/1, coming at about 1 kg. For washing the inside wall of the receptacle 7 and the steel balls 9 before mechanical alloying, first ordinary water is put therein to treatment twice at 400 rpm in running speed for 30 minutes, distilled water next once under the same condition and finally alcohol once to the treatment. The receptacle 7 was dried inside by evacuation after closing and heating up to about 50 °C on the heater. The mixed powder 8 was put into the receptacle 7, and at the point in time when the degree of vacuum came within 1.33·10⁻² to 1.33·10⁻³ mbar (10⁻² to 10⁻³ torr) by evacuation and heating at about 120 °C thereafter, the receptacle 7 was substituted inside with a high purity Ar gas 99.99% of 1 atm. pressure and then sealed up. Since water in the water cooling jacket 5 was discharged by N2 gas before heating, water pouring and cooling were commenced simultaneously with starting the mechanical alloying at 280 rpm in rotational speed. The time for process was 30 hours. A mechanical alloying powder processed was stored in a vacuum receptacle. As the result of observation thereof, it is found that the particle is large, lumpish and well forged.

Described next is a sintering for solidification of the AlN dispersion Fe-based austenitic steel powder obtained as above. A soft steel receptacle 13 of FIG. 2 which was 33 mm in diameter and 50 mm in height was charged densely with a part of AlN dispersion Fe-based austenitic steel powder 12, covered by a net of a stainless steel 14 at 200 mesh or below, and the receptacle 13 was subjected to TIG (Tungsten - Inert Gas) welding with a cover 16 provided with an evacuation pipe 15. The evacuation was carried out stepwise at 1.33·10⁻² to 1.33·10⁻³ mbar (10⁻² to 10⁻³ torr) under conditions of 20 minutes at 100 °C, 20 minutes at 200 °C and then 30 minutes at 400 °C. After the evacuation was over, the pipe was compressed at two spots to TIG welding. Sintering was carried out by having the end portion treated on a hot isostatic process (HIP) unit under conditions: temperature rise from room temperature to 1,200 °C for 1 hour, holding at 1,200 °C for 1 hour, and temperature drop from 1,200 °C to room temperature for 30 minutes.

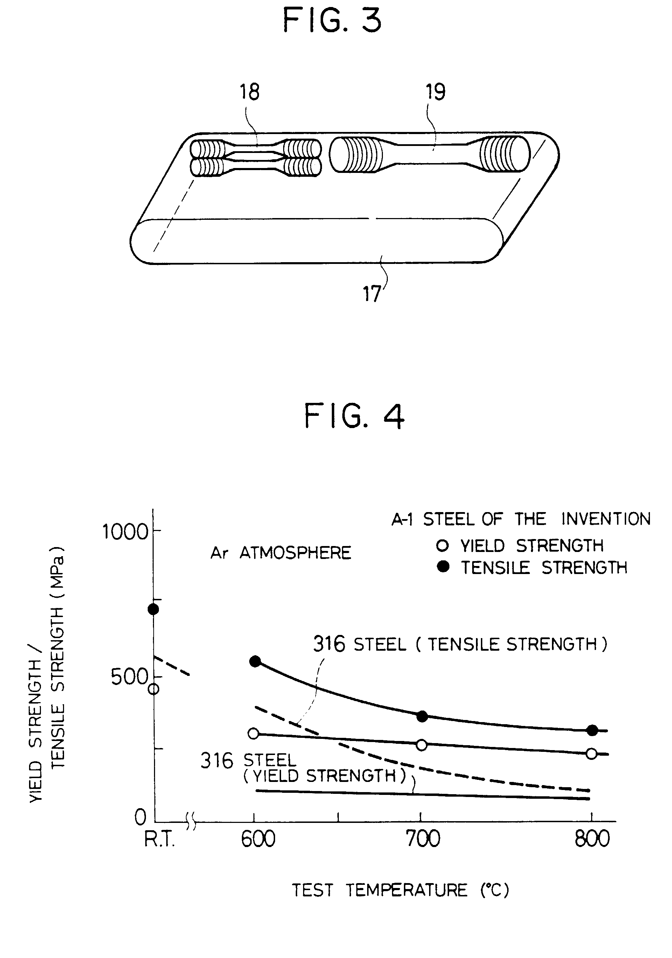

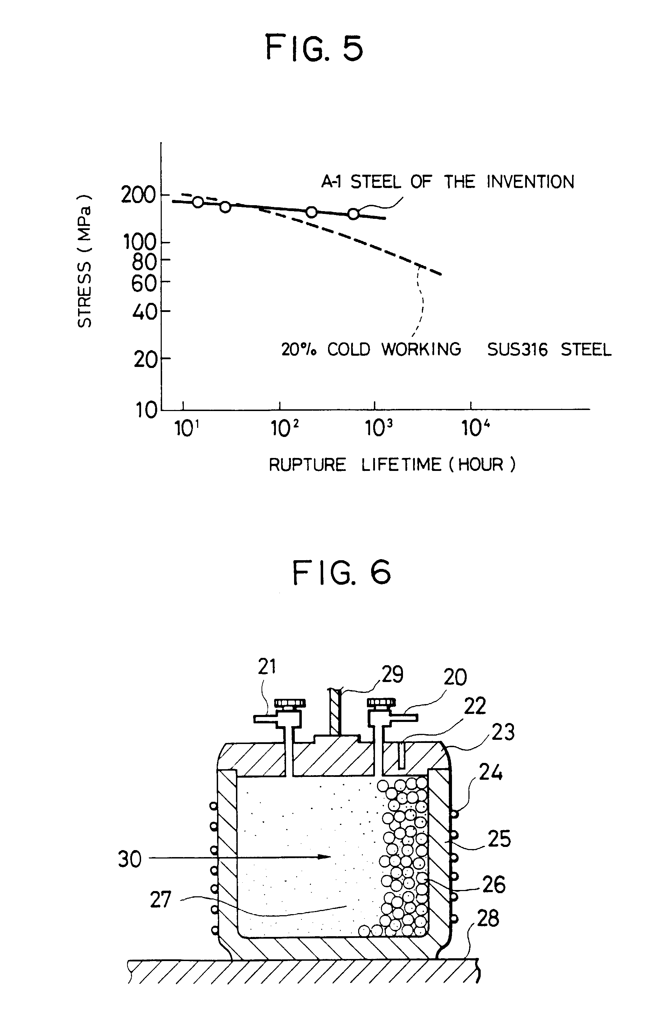

Next shown is a high temperature strength test carried out on AlN dispersion strengthened Fe-based austenitic steel. After rolled to a plate 10 mm thick at 1,050 °C, the sintered soft steel receptacle 13 somewhat contracted was further annealed at 1,050 °C for 1 hour. The receptacle 13 and the stainless steel 14 were removed from the plate. A tension test piece 18 2 mm in effective gauge diameter and 10 mm in length and a creep test piece 19 4 mm in diameter and 20 mm in length were worked from a plate 17 shown in FIG. 3. A chemical analysis result of AlN dispersion strengthened austenitic steel A-1 which is the heat resisting strengthened member is shown in TABLE 2. As the result of observation of the surface metal structure of A-1 steel, visible fine particles looked bright whitely as characteristic of insulator, and Al and N were detected from analyzing the particles. A yield strength, a tensile strength and a creep rupture strength at 650 °C of the A-1 steel are shown each in FIG. 4 and FIG. 5. It was superior in yield and tensile strengths to a conventional steel. A creep rupture lifetime was longer than 20% cold worked 316 steel.

### Example 2

One embodiment of an AlN dispersion Fe-based ferrite steel powder according to the present invention and a method for manufacturing a heat resisting strengthend member obtained from the powder will be described with reference to FIG. 6. In the example, an epicyclic ball mill shown in FIG. 6 was used for mechanical alloying. A construction of the apparatus comprises an evacuation valve 20, a cover 23 provided with an Ar gas substitution valve 21 and a small aperture 22, a receptacle 25 equipped with resistance heater 24, a steel ball 26 10 mm in diameter placed within the receptacle 25, a mixed powder 27, a rotating board 28 and a retainer 29 for the cover 23. Rotations are transferred from en external driving system to the rotating board 28, a centrifugal force indicated by an arrow 30 is generated on the four receptacles 25 disposed thereon crosswise and each receptacle 25 also rotates on its axis. The steel ball 26 rotates along an inside wall of the receptacle 25, and the steel balls 26 collide with each other. For making two kinds (Ti- or Nb-added) of low C AlN dispersion ferrite steel powders consisting of about C: 0.01 wt% , Cr: 17 wt%, Mc: 2.0 wt%, Ti: 0.5 wt%, AlN: 0.25 wt%, and about C: 0.01 wt%, Cr: 17 wt%, Mo: 2.0 wt%, Nb: 0.7 wt%, AlN: 0.25 wt% respectively, each powder of 430L steel, Mo, AlN, Ti, and each powder of 430L steel, Mo, Nb, AlN were selected from powders shown in TABLE 1 and prepared so as to have the intended compositions. A weight of the mixed powder27 was about 150 g, corresponding to 1/7 of a gross weight of the steel balls 26. A treatment preceding to the mechanical alloying was performed as in the case of Example 1. The ball mill of this type is not arranged with a water cooling system. The mechanical alloying process was effected at 330 rpm in rotational frequency for 48 hours all told. The operation was stopped at every 8 to 10 hours during the period. A temperature rise of the receptacle 25 8 hours after the operation started was 60 °C or so on an average. The mechanical alloying was carried out twice likewise, and the AlN dispersion Fe-based ferrite steel powder is which Ti or Nb was included was obtained weighing 150g each. As the result of observation of the Ti-added alloying powder, as compared with the austenitic steel powder of Example 1, the powder was flat like a rice grain and smaller in size.

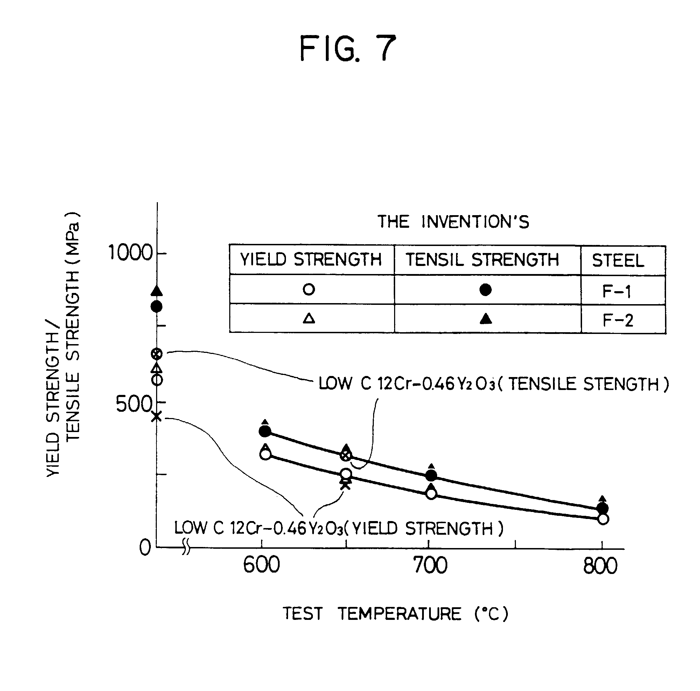

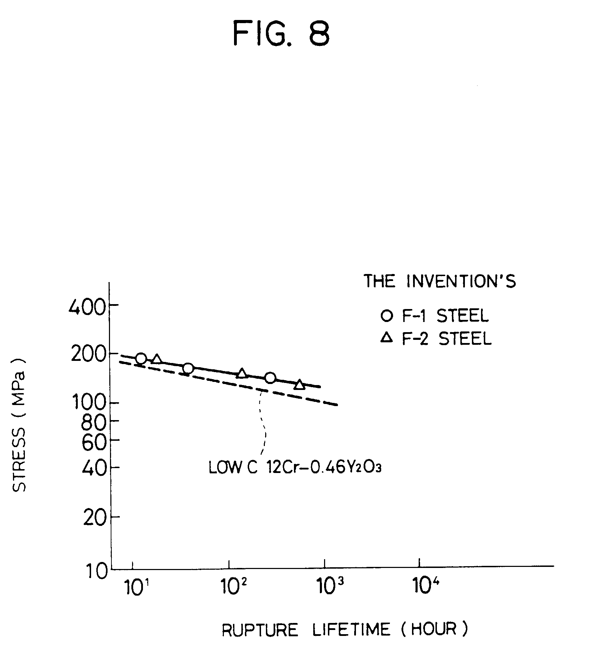

Barring the temperature 1,200 °C having been changed to 1,100 °C for holding, the sintering for solidification according to HIP was carried out in proportion to Example 1 otherwise. After hot rolling down to 10 mm in thickness at 1,050 °C, the annealing was carried out at 1,050 °C likewise for 1 hour. Chemical analysis values of the AlN dispersion strengthened alloys or two kinds of heat resisting strengthened members are given in TABLE 2 as F-1 and F-2. Here, it appears that nickel was entrapped from the receptacle 25 consisting of 18Cr - 8Ni stainless steel. A result obtained through strength test by the same test piece as Example 1 is shown in FIG. 7 and FIG. 8. In a comparison with ODS steel (low C12Cr-0.46Y₂O₃), F-1 and F-2 of the present invention were equivalent thereto in both yield and tensile strengths, and also superior in creep strength on a long lifetime side.

### Example 3

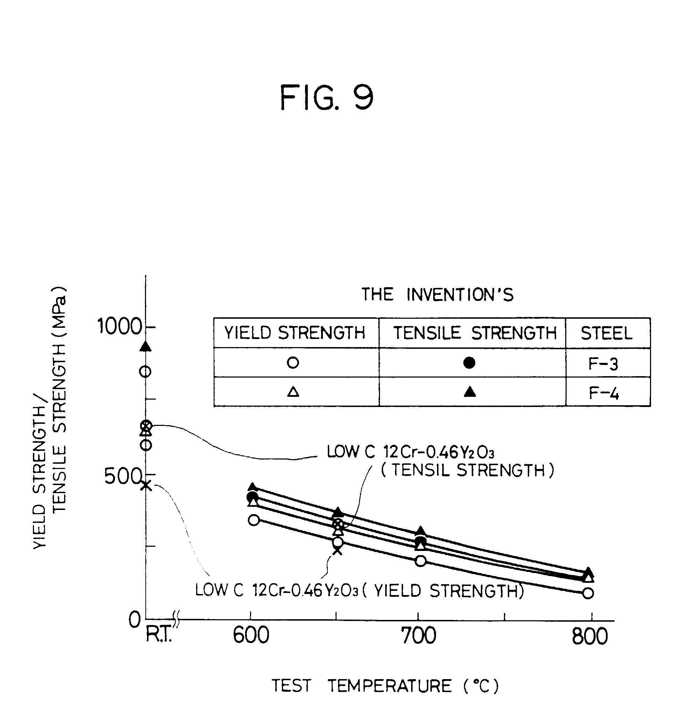

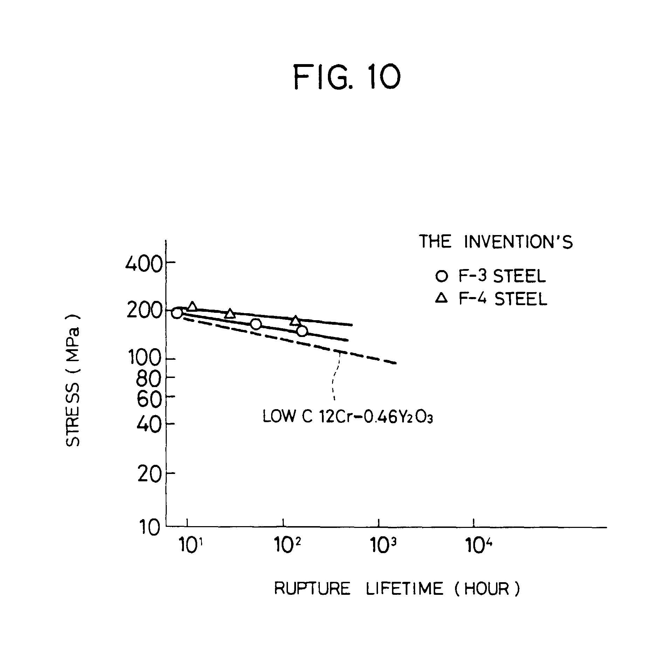

Described here is an embodiment on how to manufacture low C AlN dispersion strengthened Fe-based ferrite steels with W and Ti added thereto but different in the amount of AlN content. In regard to a manufacture of two kinds of dispersion strengthened steels consisting of about C: 0.01 wt%, Cr: 17 wt%, W: 2.0 wt%, Ti: 0.5 wt%, AlN: 0.25 wt%, and about C: 0.01 wt%, Cr: 17 wt%, W: 2.0 wt%, Ti: 0.5 wt%, AlN: 0.5 wt%, each powder of 430L steel, W, Ti and AlN was selected from TABLE 1, and two kinds of mixed powders prepared so as to have the aforementioned compositions were alloyed mechanically by the attriter in Example 1. The conditions for mechanical alloying applied correspondingly to Example 1, and sintering condition and heat treatment applied correspondingly to Example 2. A substitutional component analysis result of these two kinds of AlN dispersion Fe-based ferrite steels is given in TABLE 2 as F-3 and F-4. A result obtained through strength test of the test piece same in shape as Example 1 is given in FIG. 9 and FIG. 10. Both the steels F-3 and F-4 were superior to conventional ODS steels in yield and tensile strengths and creep strength.

### Example 4

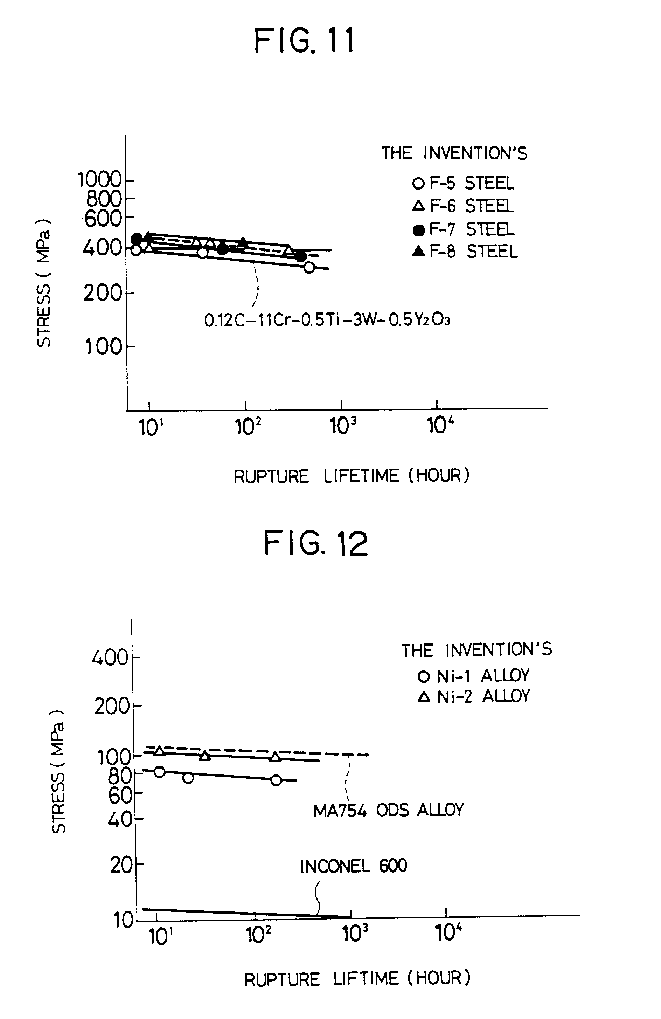

Described next is a manufacture of high C AlN dispersion strengthened Fe-based ferrite steels with Al and Mo added thereto but different in the amount of AlN content. For the two kinds of steels with composition estimated as about C: 0.10 wt%, Cr: 17 wt%, Mo: 2.5 wt%, Al: 4.0 wt%, AlN: 0.55 wt%, and about C: 0.10 wt% or below, Cr: 17 wt%, Mo: 2.5 wt%, Al: 4.0 wt%, AlN: 1.0 wt% each, mixed powders of the two kinds of steels with the aforementioned compositions were prepared by means of each powder of 430L steel, Mo, Al and AlN in TABLE 1. A mechanical alloying on the attriter, conditions of sintering for solidification, a subsequent hot working and heat treatment applied all correspondingly to Example 3. A chemical component analysis value of these two kinds of steels is given in TABLE 2 as F-5 and F-6. A result of strength test is shown in FIG. 11. While somewhat inferior to a conventional ODS steel of high C (0.12C-11Cr-0.5TI-3W-0.5Y₂O₃) in creep strength, F-6 does not reduce in strength on a long time side.

### Example 5

Described then is a manufacture of AlN dispersion strengthened Fe-based ferrite steels with high C, low Cr, W and Ti added, and Mo, W, Ti added, which is given in one embodiment of the present invention. Estimated compositions of these two kinds of steels comprise about C: 0.10 wt%, Cr: 12 wt%, W: 2.0 wt%, Ti: 0.5 wt%, AlN: 0.7 wt%, and about C: 0.10 wt%, Cr: 12 wt%, Mo: 1.0 wt%, W: 2.0 wt%, Ti: 0.5 wt%, AlN: 0.7 wt%, and mixed powders of the intended compositions were obtained from preparing each powder of 410L steel, carbon (C), Mo, W, Ti and AlN given in TABLE 1. Mechanical alloying and a sintering for solidification were carried out according to Example 2, however, for heat treatment after the hot rolling at 1,100 °C, a tempering was effected at 780 °C for 2 hours for high C after a normalizing at 1,050 °C for 1 hour and air cooling. As the result of observation of AlN dispersion strengthened Fe-based ferrite steel in which Mo, W and Ti were added after the mechanical alloying, the particle was rather smaller as compared with the low C steel, and the size distribution covered an extensive range. Actual component analysis values of the two heat resisting strengthened steel members are given in TABLE 2 as F-7 and F-8. A result obtained through strength test by the test piece according to Example 1 is shown in FIG. 11. The steels F-7 and F-8 accroding to the present invention indicate an equivalent creep behavior and seem to be somewhat superior to F-5 and F-6 in creep strength. The two steels had a creep strength corresponding to the characteristic of conventional ODS steels.

### Example 6

Described further is an embodiment of AlN dispersion strengthened Ni-based alloy relating to the present invention. The description refers to the case where INCONEL 600 (trademark) was employed for a matrix and also to the case where γ' was formed in the matrix. From preparing Ni, Cr, 430L steel, Ti, Al, Nb and AlN in TABLE 1, expected compositions of the mixed powders comprise about Cr: 16 wt%, Fe: 7 wt%, AlN: 0.5 wt%, and about Cr: 16 wt%, Fe: 7 wt %, Ti: 2.5 wt %, Al: 1 wt %, Nb: 1 wt %, AlN: 0.5 wt% each. Barring the mechanical alloying being effected at 270 rpm in rotational frequency for 40 hours, the process applied correspondingly to Example 1. As the result of observation of the mechanical alloying powder to which Ti, Al and Nb were added, an extensive size distribution was observed.

The sintering for solidification applied correspondingly to Example 1. The hot rolling was carried out at 1,050 °C, and then a heat treatment was applied at 1,200 °C for 1 hour. Chemical analysis values of the two kinds of heat resisting strengthened alloys are indicated in TABLE 2 as Ni-1 and Ni-2. A result obtained through a creep rupture strength test carried out by the rest piece according to Example 1 at 1,093 °C is shown in FIG. 12. In the INCONEL-based AlN dispersion strengthened Ni-1 alloy, the heat resisting strength was improved better than a conventional INCONEL 600 alloy. On the other hand, in the γ' precipitating Ni-2, the strength was somewhat inferior to a conventional MA754ODS alloy.

### Example 7

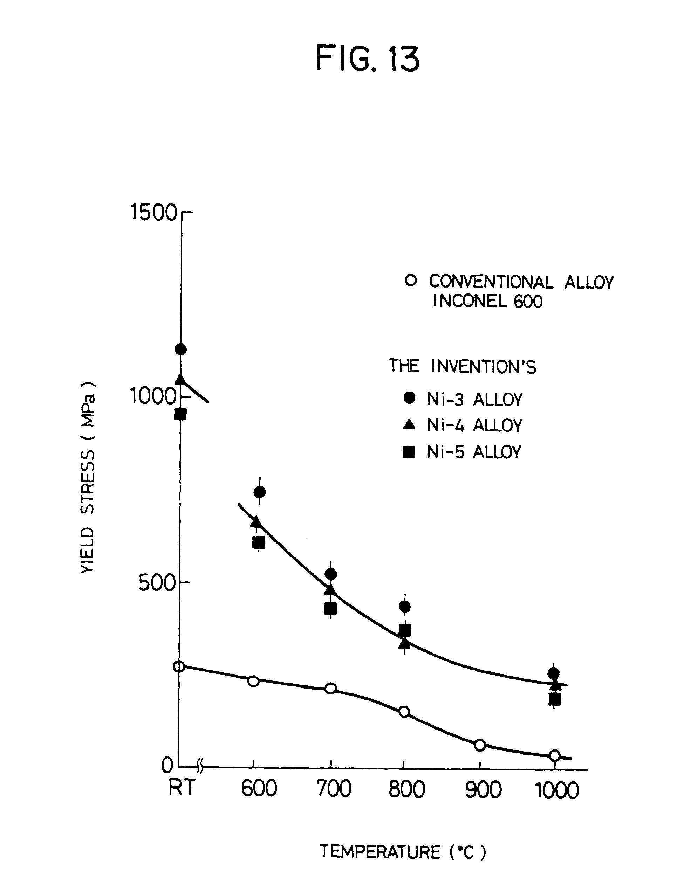

The description refers to two examples of high W AlN dispersion strengthened Ni-based alloys according to the present invention. Estimated compositions of the two alloys comprise about C: 0.12 wt%, Co: 10 wt%, Cr: 23 wt%, W: 15 wt%, Ti: 1.0 wt%, Zr: 0.5 wt%, AlN: 0.5 wt%, and about C: 0.12 wt%, Cr: 23 wt%, W: 10 wt%, Mo: 5.0 wt%, Ti: 1.0 wt%, Nb: 2.0 wt%, AlN: 0.5 wt%, and mixed powders of the intended compositions were obtained through a preparation of each powder of Ni, Cr, Co, Mo, W, Ti, Nb, carbon, Zr and AlN shown in TABLE 1. Barring the process at 270 rpm in rotational frequency for 40 hours, the mechanical alloying applied correspondingly to Example 1 otherwise. The hot rolling was carried out at 1,050 °C, and a heat treatment was applied at 1,100 °C for 1 hour thereafter. Chemical analysis values of the alloys are given in TABLE 2 as Ni-3 and Ni-4. A result of strength test carried out by the test piece according to Example 1 is shown in FIG. 13. A yield strength of the two alloys was satisfactory up to 1,000 °C for the solid solution strengthening being superposed according as a total amount of W and Mo increased.

### Example 8

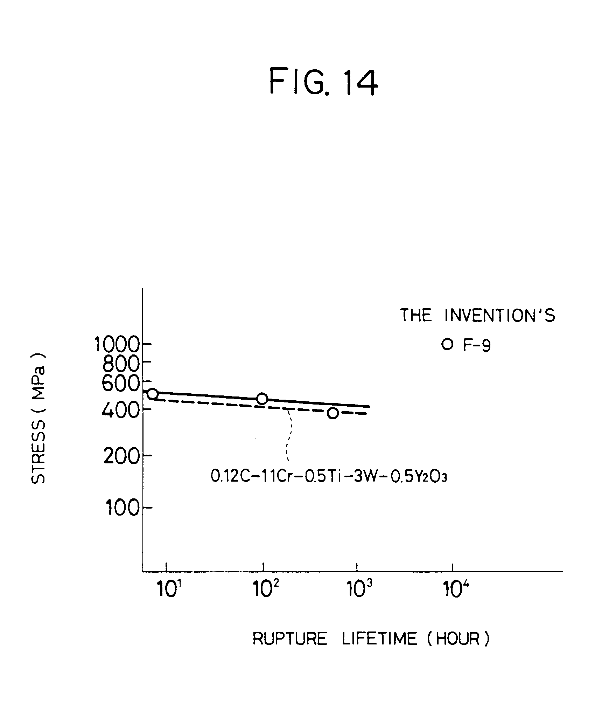

Described here is an embodiment of manufacture of BN dispersion strengthened Fe-based ferrite steel with a high C and, Al and W added, relating to the present invention. For the steel with an estimated composition coming in about C: 0.10 wt%, Cr: 20 wt%, W: 2.5 wt%, Al: 3.0 wt% and BN: 0.60 wt%, a mixed powder of the steel of the aforementioned composition was prepared by means of each powder of 430L steel, Cr, W, Al, carbon and BN in TABLE 1. Mechanical alloying by an attriter, sintering condition for solidification, and subsequent hot working and heat treatment applied all correspondingly to Example 3. A chemical component analysis value of the steel is given in TABLE 2 as F-9. A result of creep rupture strength test at 650 °C is shown in FIG. 14. The steel was superior in creep strength to a conventional ODS steel of high C (0.12C-11Cr-0.5Ti-3W-0.5Y₂O₃).

### Example 9

Given here is an embodiment of high W BN dispersion strengthened Ni-based alloy according to the present invention. An estimated composition of the alloy comprised about C: 0.12 wt%, Cr: 23 wt%, W: 15 wt%, Ti: 1.0 wt%, Zr: 0.5 wt% and BN: 0.6 wt%, and a mixed powder of the intended composition was obtained from preparing each powder of Ni. Cr, W, Ti, carbon, Zr and BN shown in TABLE 1. Mechanical alloying, sintering condition for solidification, hot rolling and heat treatment applied correspondingly to the AlN dispersion strengthened Ni-based alloy. A chemical analysis value of the alloy is given in TABLE 2 as Ni-5. A result of strength test is shown in FIG. 13 along with the alloys Ni-3 and Ni-4. A yield strength of the alloy was somewhat inferior to the AlN dispersion alloy, however, the steel had a satisfactory high temperature strength.

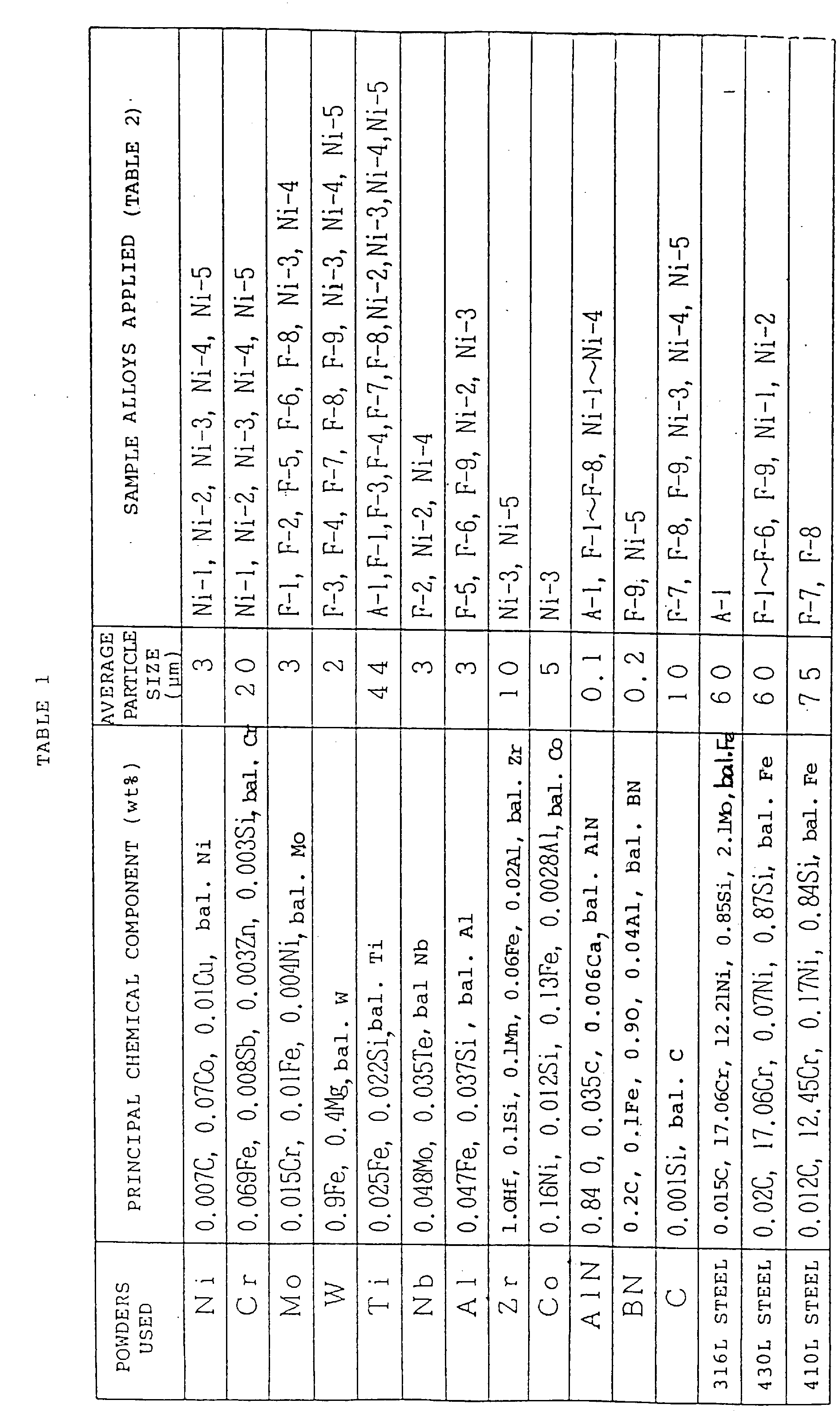

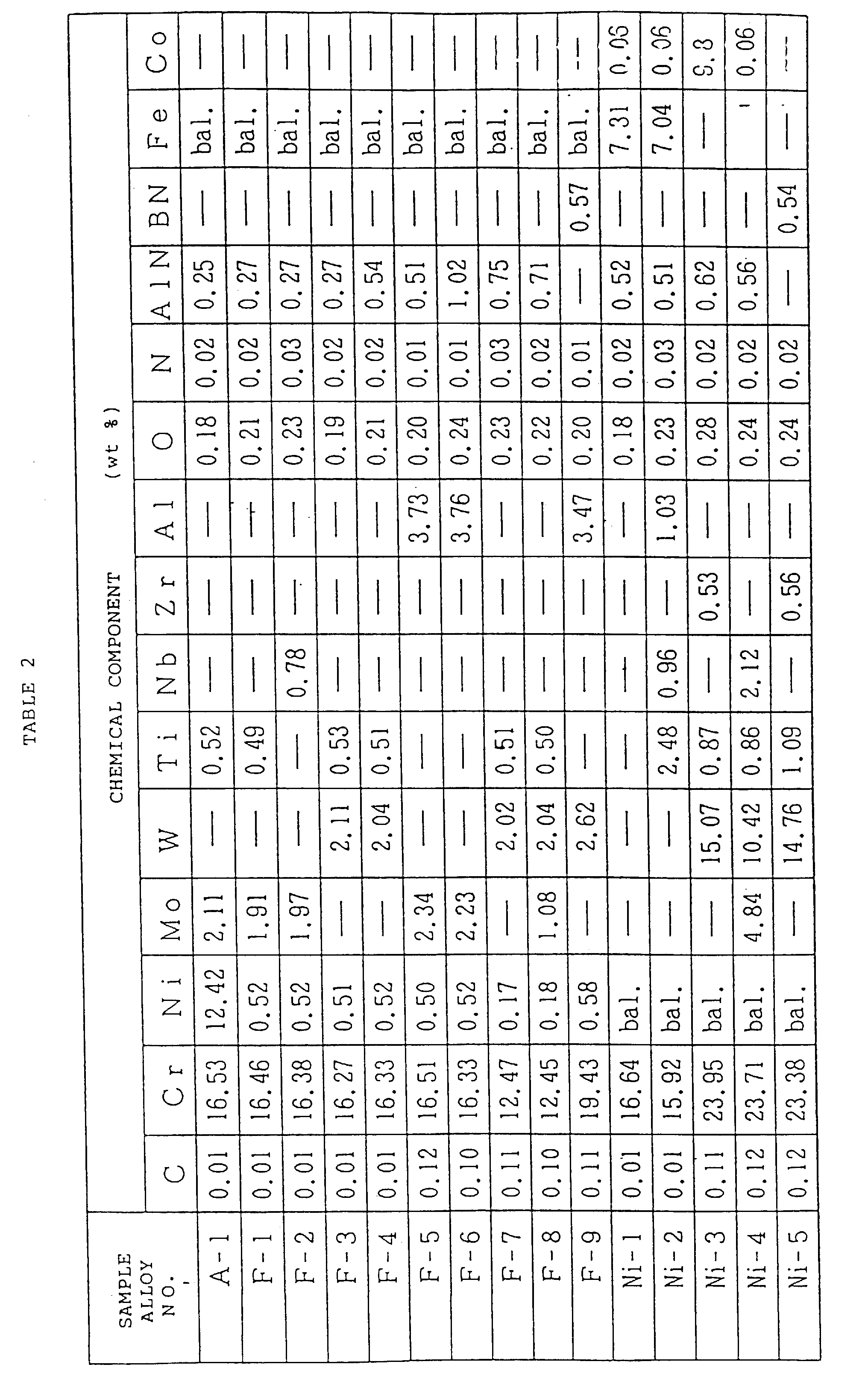

### Example 10

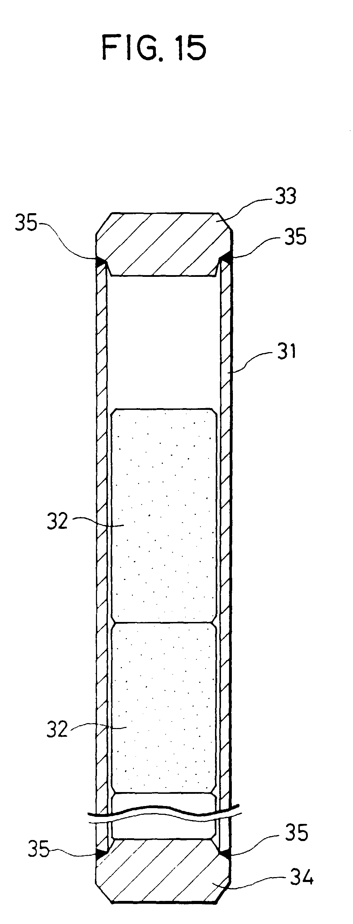

An embodiment of a fast reactor fuel covered tube relating to the present invention will be described with reference to Fig. 15. A plurality of fuels 32 are contained in a tubular covered tube 31. An upper end plug 33 and a lower end plug 34 are welded to upper and lower end openings of the covered tube 31. A reference numeral 35 indicates a weld zone. In the present invention the covered tube 31 is formed of a heat resisting strengthened alloy of the aforementioned AlN or BN particle dispersion Fe-based ferrite steel or austenitic steel. A satisfactory high temperature strength was obtained for the fast reactor fuel covered tube even from working under a high temperature environment up to 800°C. Further, it was free from voids to arise in a simulation irradiation by electrons at 600 to 800°C.

### Example 11

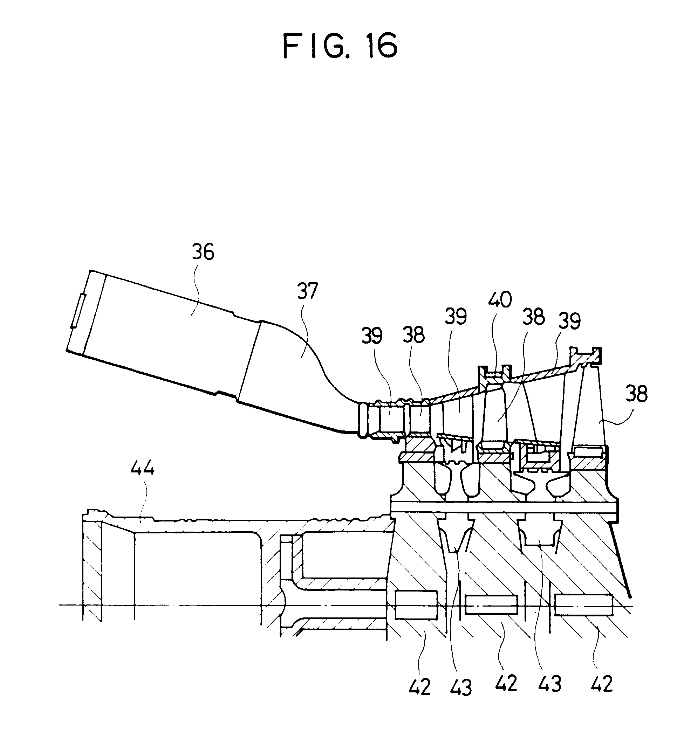

An embodiment of a gas turbine relating to the present invention will then be described with reference to Fig. 16. At least one member of a liner 36 and a transition piece 37 of the combustor, a blade 38, a vane 39, and a shroud 40 is formed of a heat resisting strengthened alloy of the aforementioned Al or BN particle dispersion Ni-based alloy. Further, a disk 42 is formed of a heat resisting strengthened alloy of the aforementioned AlN or BN particle dispersion Fe-based ferrite steel or austenitic steel. A satisfactory high temperature Strength was obtained for the aforementioned members of the gas turbine. In the illustration, a reference numeral 43 indicates a spacer, and 44 indicates a distant piece.

According to the present invention, in a material exposed to high temperatures and irradiations of fission neutrons from the fuel like the fast reactor fuel covered tube or a material for which long lifetime and high temperature strength characteristics are required like the gas turbine, a remarkable effect will be obtainable for enhancement of safety and reliability as high temperature materials from using heat-resistant nitride dispersion strengthened alloys of the present invention which are realizable by a mechanical alloying process.

## Claims

1. A method of manufacturing a nitride dispersed alloy comprising the steps of:
inserting into a receptacle of a ball mill at least one kind of an AlN powder and a BN powder, and a metallic powder selected from a group consisting of a Fe-based ferritic stainless steel powder, a Fe-based austenitic stainless steel powder, or a nickel-based alloy powder;
mechanically alloying the AlN powder and/or the BN powder with the metallic powder for incorporating AlN parties and/or BN particles within the metallic powder to form a mixed powder comprising the metallic powder and the AlN particles and/or the BN particles by a high energy ball mill with the rotational frequency at 200-400 rpm; and
filling a pre-selected metallic vessel with the mechanically alloyed mixed powder, vacuum sealing the vessel after degassing and hot isostatic pressing or hot extruding and then sintering the metallic vessel;
wherein the amount of the AlN powder or the BN powder incorporated is 0.27 to 1.02 wt% and 0.5 to 1.0 wt%, respectively, of the Fe-based ferrite stainless steel, 0.25 to 0.5 wt% of the Fe-based austenitic stainless steel, or 0.25 - 1.0 wt% of the nickel-based alloy; and the average particle diameter of the AlN particle or the BN particle after sintering is 0.001 µm to 5 µm.

2. The method as set forth in claim 1, wherein the metallic powder of said Fe-based austenitic stainless steel contains C: 0.01 to 0.15 wt%, Cr: 15 to 33 wt%, Ni: 12 to 30 wt%, Si: 1.0 wt% or less, Mn: 0.5 wt% or less, and at least one kind of Mo: 1.25 to 3.0 wt%, Al: 0.1 to 0.2 wt%, Ti: 0.5 to 2.0 wt%, Nb: 0.7 to 2.0 wt% and W: 0.005 to 3.0 wt%, and the remainder being Fe apart from impurities.

3. The method as set forth in claim 1, wherein the metallic powder of said Fe-based ferritic stainless steel contains C: 0.01 to 0.20 wt%, Cr: 9 to 20 wt%, Si: 0.9 wt% or less, Ni: 0.6 wt% or less, Mn: 0.1 wt% or less, either Ti: 0.5 to 1.0 wt% or Nb: 0.7 to 2.0 wt%, and either Mo: 0.5 to 3.0 wt% or W: 0.5 to 3.0 wt% or Mo + W ≤ 4.0 wt%, optionally Al : 2.0 to 5.0 wt% and the remainder being Fe apart from impurities.

4. The method as set forth in claim 3, wherein said metallic powder contains Al: 2.0 to 5.0 wt%.

5. The method as set forth in claim 1, wherein the metallic powder of said nickel based alloy contains C: 0.08 wt% or less, Co: 0.1 wt% or less, Cr: 15 to 17 wt%, Fe: 7 to 8 wt%, and the remainder being nickel apart from impurities.

6. The method as set forth in claim 1, wherein the metallic powder of said nickel based alloy contains C: 0.01 to 0.15 wt%, Co: 0.1 wt% or less, Cr: 10 to 23 wt%, Fe: 7 wt% or less, Ti: 0.4 to 5.0 wt%, W: 5 wt% or less, Mo: 5 wt% or less, Al: 0.5 to 6.0 wt%, Nb: 0.1 to 2.0 wt%, Si: 1 wt% or less, Mn: 0.7 wt% or less, Ta: 4.5 wt% or less, and the remainder being nickel apart from impurities.

7. The method as set forth in claim 1, wherein the metallic powder of said nickel based alloy contains C: 0.05 to 0.15 wt%, Co: 0.01 to 10 wt%, Cr: 20 to 25 wt%, either W: 10 to 17 wt% or W + Mo: 10 to 17 wt%, and any one or all of Ti, Nb, Ta, Zr at 3 wt% or less, and the remainder being nickel apart from impurities.

8. The method as set forth in anyone of claims 1 to 7, wherein the mechanical alloying in the ball mill comprises keeping the mixed powders, a vessel of the ball mill and steel balls at 100 °C to 200 °C, degassing said vessel to 1.33 · 10⁻² to 1.33 · 10⁻³ mbar (10⁻² to 10⁻³ torr) internally, exchanging next with high purity Ar gas of 99.9 wt% under 1013 mbar (1 atmospheric) pressure, then carrying out an alloying treatment at near room temperature for 20 to 50 hours with 200 to 400 rpm.

9. The method as set forth in anyone of claims 1 to 7, wherein a mean diameter distribution of the primary particles of AlN powders and BN powders before the mechanical alloying is not more than 0.1 µm.

10. The method as set forth in anyone of claims 1 to 7, wherein a diameter distribution of the Fe-based steel powders or nickel based alloy powders before the mechanical alloying is not more than 150 µm.

11. The method as set forth in anyone of claims 1 to 10 for manufacturing a heat-resistant strengthened solid,
wherein said metallic vessel charged with the mechanically alloyed powders is vacuum sealed after degassing its interior,
and the sealed vessel is sintered after applying a predetermined work by a hot isotropic pressure or a hot extrusion.

12. The use of a nitride dispersion strengthened alloy manufactured as set forth in claims 2 or 3 for a covered tube (31) of a fast breeder reactor provided with:
a tubular covered tube (31) for containing fuels therein; and
stoppers (33, 34) provided on openings of the covered tube (31).

13. The use of a nitride dispersion strengthened alloy manufactured as set forth in claims 2 or 3 for a gas turbine disk.

14. The use of a nitride dispersion strengthened alloy manufactured as set forth in claims 5, 6 or 7 for at least one member of a combustor (36, 37), a turbine nozzle (39), a blade (38) and a shroud (40) of a gas turbine.

## Patentansprüche

1. Verfahren zur Herstellung einer nitrid-dispersionsverfestigten Legierung mit den Schritten:
Einbringen wenigstens einer Art eines AlN-Pulvers und eines BN-Pulvers, sowie eines Metallpulvers, das aus einer aus einem ferritischen, nichtrostenden Fe-Basis-Stahlpulver, einem austenitischen, nichtrostenden Fe-Basis-Stahlpulver oder einem Nickelbasislegierungspulver bestehenden Gruppe gewählt wird, in einen Behälter einer Kugelmühle;
mechanisches Legieren des AlN-Pulvers und/oder des BN-Pulvers mit dem Metallpulver zum Einführen von AlN-Teilchen und/oder BN-Teilchen in das Metallpulver zwecks Bildens eines gemischten Pulvers, das das Metallpulver und die AlN-Teilchen und/oder die BN-Teilchen aufweist, mittels einer Hochenergie-Kugelmühle mit der Drehfrequenz bei 200-400 U/min; und
Füllen eines vorgewählten Metallgehäuses mit dem mechanisch legierten gemischten Pulver, Vakuumabdichten des Gehäuses nach Entgasung und Heißisostatischpressen oder Heißextrudieren, und danach Sintern des Metallgehäuses;
wobei die eingeführte Menge des AlN-Pulvers oder des BN-Pulvers 0,27 bis 1,02 Gew.-% bzw. 0,5 bis 1,0 Gew.-% des ferritischen, nichtrostenden Fe-Basis-Stahls, 0,25 bis 0,5 Gew.-% des austenitischen, nichtrostenden Fe-Basis-Stahls oder 0,25 bis 1,0 Gew.-% der Nickelbasislegierung ist; und der Duchschnittsteilchendurchmesser des AlN-Teilchens oder des BN-Teilchens nach dem Sintern 0,001 µm bis 5 µm ist.

2. Verfahren nach Anspruch 1, wobei das Metallpulver des austenitischen, nichtrostenden Fe-Basis-Stahls 0,01 bis 0,15 Gew.-% C, 15 bis 33 Gew.-% Cr, 12 bis 30 Gew.-% Ni, 1,0 Gew.-% oder weniger Si, 0,5 Gew.-% oder weniger Mn und wenigstens eine Art von 1,25 bis 3,0 Gew.-% Mo, 0,1 bis 0,2 Gew.-% Al, 0,5 bis 2,0 Gew.-% Ti, 0,7 bis 2,0 Gew.-% Nb und 0,005 bis 3,0 Gew.-% W, und Rest Fe außer Verunreinigungen enthält.

3. Verfahren nach Anspruch 1, wobei das Metallpulver des ferritischen, nichtrostenden Fe-Basis-Stahls 0,01 bis 0,20 Gew.-% C, 9 bis 20 Gew.-% Cr, 0,9 Gew.-% oder weniger Si, 0,6 Gew.-% oder weniger Ni, 0,1 Gew.-% oder weniger Mn, entweder 0,5 bis 1,0 Gew.-% Ti oder 0,7 bis 2,0 Gew.-% Nb, und entweder 0,5 bis 3,0 Gew.-% Mo oder 0,5 bis 3,0 Gew.-% W oder ≤ 4,0 Gew.-% Mo + W, wahlweise 2,0 bis 5,0 Gew.-% Al, und Rest Fe außer Verunreinigungen enthält.

4. Verfahren nach Anspruch 3, wobei das Metallpulver 2,0 bis 5,0 Gew.-% Al enthält.

5. Verfahren nach Anspruch 1, wobei das Metallpulver der Nickelbasislegierung 0,08 Gew.-% oder weniger C, 0,1 Gew.-% oder weniger Co, 15 bis 17 Gew.-% Cr, 7 bis 8 Gew.-% Fe und Rest Nickel außer Verunreinigungen enthält.

6. Verfahren nach Anspruch 1, wobei das Metallpulver der Nickelbasislegierung 0,01 bis 0,15 Gew.-% C, 0,1 Gew.-% oder weniger Co, 10 bis 23 Gew.-% Cr, 7 Gew.-% oder weniger Fe, 0,4 bis 5,0 Gew.-% Ti, 5 Gew.-% oder weniger W, 5 Gew.-% oder weniger Mo, 0,5 bis 6,0 Gew.-% Al, 0,1 bis 2,0 Gew.-% Nb, 1 Gew.-% oder weniger Si, 0,7 Gew.-% oder weniger Mn, 4,5 Gew.-% oder weniger Ta und Rest Nickel außer Verunreinigungen enthält.

7. Verfahren nach Anspruch 1, wobei das Metallpulver der Nickelbasislegierung 0,05 bis 0,15 Gew.-% C, 0,01 bis 10 Gew.-% Co, 20 bis 25 Gew.-% Cr, entweder 10 bis 17 Gew.-% W oder 10 bis 17 Gew.-% W + Mo, und 3 Gew.-% oder weniger von irgendeinem oder allen von Ti, Nb, Ta und Zr und Rest Nickel außer Verunreinigungen enthält.

8. Verfahren nach irgendeinem der Ansprüche 1 bis 7, wobei das mechanische Legieren in der Kugelmühle ein Halten der gemischten Pulver, eines Behälters der Kugelmühle und von Stahlkugeln auf 100 °C bis 200 °C, ein Entgasen des Behälters auf 1,33 · 10⁻² bis 1,33 · 10⁻³ mbar (10⁻² bis 10⁻³ Torr) im Inneren, dann ein Austauschen mit hochreinem Ar-Gas von 99,9 Gew.-% bei einem Druck von 1013 mbar (1 at), danach die Durchführung einer Legierungsbehandlung bei nahe Raumtemperatur für 20 bis 50 Stunden mit 200 bis 400 U/min aufweist.

9. Verfahren nach irgendeinem der Ansprüche 1 bis 7, wobei eine Durchschnittsdurchmesserverteilung der primären Teilchen der AlN-Pulver und BN-Pulver vor dem mechanischen Legieren nicht mehr als 0,1 µm ist.

10. Verfahren nach irgendeinem der Ansprüche 1 bis 7, wobei eine Durchmesserverteilung der Fe-Basis-Stahlpulver oder Nickelbasis-Legierungspulver vor dem mechanischen Legieren nicht mehr als 150 µm ist.

11. Verfahren nach irgendeinem der Ansprüche 1 bis 10 zur Herstellung eines hitzebeständigen verfestigten Festkörpers, wobei das mit den mechanisch legierten Pulvern gefüllte Gehäuse nach dem Entgasen seines Inneren vakuumabgedichtet wird und
das abgedichtete Gehäuse nach Einwirkung einer vorbestimmten Verformung durch einen heißisotropen Druck oder eine Heißextrusion gesintert wird.

12. Verwendung einer nach den Ansprüchen 2 oder 3 hergestellten nitrid-dispersionsverfestigten Legierung für ein ummanteltes Rohr (31) eines Schnellbrüterreaktors, der mit:
einem rohrförmigen ummantelten Rohr (31) zur Aufnahme von Brennstoffen darin; und
Absperrorganen (33, 34), die an Öffnungen des ummantelten Rohres (31) vorgesehen sind, versehen ist.

13. Verwendung einer nach den Ansprüche 2 oder 3 hergestellten nitrid-dispersionsverfestigten Legierung für einen Gasturbinenläufer.

14. Verwendung einer nach den Ansprüchen 5, 6 oder 7 hergestellten nitrid-dispersionsverfestigten Legierung für wenigstens ein Bauteil der aus einem Brenner (36, 37), einem Leitschaufelkranz (39), einer Laufschaufel (38) und einer Ummantelung (40) einer Gasturbine bestehenden Gruppe.

## Revendications

1. Procédé pour la fabrication d'un alliage renforcé par dispersion de nitrure comprenant les étapes consistant à :
introduire dans un récipient d'un broyeur à boulets au moins un type de poudre AlN et de poudre BN et une poudre métallique choisie à partir du groupe constitué par une poudre d'acier inoxydable ferritique à base de Fe, une poudre d'acier inoxydable austénitique à base de Fe, ou une poudre d'alliage à base de nickel ;
à allier mécaniquement la poudre AlN et/ou la poudre BN avec la poudre métallique pour incorporer des particules AlN et/ou des particules BN à l'intérieur de la poudre métallique pour former une poudre mixte comprenant la poudre métallique et les particules AlN et/ou les particules BN au moyen d'un broyeur à boulets à forte énergie à une fréquence de rotation de 200 - 400 tours/minute ; et
à remplir un récipient métallique présélectionné de la poudre mélangée alliée mécaniquement, à rendre le récipient étanche sous vide après dégazage et compression isostatique à chaud ou extrusion à chaud et ensuite à fritter le récipient métallique ;
dans lequel la quantité de poudre AlN ou de poudre BN incorporée est de 0,27 à 1,02 % en poids et 0,5 à 1,0 % en poids respectivement de l'acier inoxydable ferritique à base de Fe, 0,25 à 0,5 % en poids de l'acier inoxydable austénitique à base de Fe ou 0,25 - 1,0 % en poids de l'alliage à base de nickel ; et le diamètre moyen des particules AlN ou des particules BN après frittage est de 0,001 µm jusqu'à 5 µm.

2. Procédé selon la revendication 1, dans lequel la poudre métallique de l'acier inoxydable austénitique à base de Fe contient C : 0,01 à 0,15 % en poids, Cr : 15 à 33 % en poids, Ni : 12 à 30 % en poids, Si : 1,0 % en poids ou moins, Mn : 0,5 % en poids ou moins et au moins un type de Mo : 1,25 à 3,0 % en poids, Al : 0,1 à 0,2 % en poids, Ti : 0,5 à 2,0 % en poids, Nb : 0,7 à 2,0 % en poids et W : 0,005 à 3,0 % en poids et le reste étant du Fe et les impuretés éventuelles.

3. Procédé selon la revendication 1, dans lequel la poudre métallique de l'acier inoxydable ferritique à base de Fe contient C : 0,01 à 0,20 % en poids, Cr : 9 à 20 % en poids, Si : 0,9 % en poids ou moins, Ni : 0,6 % en poids ou moins, Mn : 0,1 % en poids ou moins, soit Ti = 0,5 à 1,0 % en poids ou Nb = 0,7 à 2,0 % en poids et soit Mo : 0,5 à 3,0 % en poids soit W : 0,5 à 3,0 % en poids ou Mo + W ≤ 4,0 % en poids facultativement Al : 2,0 à 5,0 % en poids et le reste étant du Fe et les impuretés éventuelles.

4. Procédé selon la revendication 3, dans lequel la poudre métallique contient Al : 2,0 à 5,0 % en poids.

5. Procédé selon la revendication 1, dans lequel la poudre métallique de l'alliage à base de nickel contient C : 0,08 % en poids ou moins, Co : 0,1 % en poids ou moins, Cr : 15 à 17 % en poids, Fe : 7 à 8 % en poids et le reste étant du nickel et les impuretés éventuelles.

6. Procédé selon la revendication 1, dans lequel la poudre métallique de l'alliage à base de nickel contient C : 0,01 à 0,15 % en poids, Co : 0,1 % en poids ou moins, Cr : 10 à 23 % en poids, Fe : 7 % en poids ou moins, Ti : 0,4 à 5,0 % en poids, W : 5 % en poids ou moins, Mo : 5 % en poids ou moins, Al : 0,5 à 6,0 % en poids, Nb : 0,1 à 2,0 % en poids, Si : 1 % en poids ou moins, Mn : 0,7 % en poids ou moins, Ta : 4,5 % en poids ou moins, et le reste étant du nickel et les impuretés éventuelles.

7. Procédé selon la revendication 1, dans lequel la poudre métallique de l'alliage à base de nickel contient C : 0,05 à 0,15 % en poids, Co : 0,01 à 10 % en poids, Cr : 20 à 25 % en poids, soit W : 10 à 17 % en poids ou W + Mo : 10 à 17 % en poids et l'un quelconque ou la totalité de Ti, Nb, Ta, Zr à 3 % en poids ou moins et le reste étant du nickel et les impuretés éventuelles.

8. Procédé selon l'une quelconque des revendications 1 à 7, dans lequel l'alliage mécanique dans le broyeur à boulets comprend les opérations consistant à maintenir les poudres mélangées, un récipient du broyeur à boulets et des boulets d'acier à 100°C jusqu'à 200°C, à dégazer le récipient à 1,33 · 10⁻² à 1,33 · 10⁻³ mbar (10⁻² à 10⁻³ torrs) intérieurement, à échanger ensuite avec du gaz Ar haute pureté de 99,9 % en poids sous 1013 millibars (1 atmosphère) de pression puis à effectuer un traitement d'alliage à une température proche de la température ambiante pendant 20 à 50 heures à 200 jusqu'à 400 tours/minute.

9. Procédé selon l'une quelconque des revendications 1 à 7, dans lequel une répartition granulométrique moyenne des particules primaires des poudres AlN et des poudres BN avant l'alliage mécanique n'est pas supérieure à 0,1 µm.

10. Procédé selon l'une quelconque des revendications 1 à 7, dans lequel la répartition granulométrique des poudres d'acier à base de Fe ou des poudres d'alliage à base de nickel avant l'alliage mécanique n'est pas supérieure à 150 µm.

11. Procédé selon l'une quelconque des revendications 1 à 10 pour fabriquer une matière solide renforcée résistant à la chaleur
dans lequel le récipient métallique chargé des poudres alliées mécaniquement est rendu étanche sous vide après dégazage de sa partie intérieure,
et le récipient rendu étanche est fritté après application d'une opération prédéterminée par compression isotropique à chaud ou extrusion à chaud.

12. Utilisation d'un alliage renforcé par dispersion de nitrure fabriqué selon la revendication 2 ou 3, pour un tube revêtu (31) du surgénérateur rapide muni de :
un tube revêtu tubulaire (31) destiné à contenir des carburants, et
des obturateurs (33, 34) disposés sur les ouvertures du tube revêtu (31).

13. Utilisation d'un alliage renforcé par dispersion de nitrure fabriqué selon la revendication 2 ou 3, pour un disque de turbine à gaz.

14. Utilisation d'un alliage renforcé par dispersion de nitrure fabriqué selon les revendications 5, 6 ou 7, pour au moins un élément d'un appareil de combustion (36, 37), une tuyère de turbine (39), une pale (38) et un anneau de renforcement (40) de turbine à gaz.
